Europäisches Patentamt

(19) European Patent Office

Office européen des brevets

(11) EP 0 778 319 A1

(12) EUROPEAN PATENT APPLICATION

(43) Date of publication:
11.06.1997 Bulletin 1997/24

(51) Int. Cl.$^6$: C09C 1/00, C09C 1/30

(21) Application number: 96119650.8

(22) Date of filing: 06.12.1996

(84) Designated Contracting States:
FI SE

(30) Priority: 08.12.1995 JP 345051/95

(71) Applicant: OJI PAPER COMPANY LIMITED
Tokyo 104 (JP)

(72) Inventors:
• Matsuda, Masashi,
Mitsuike Hights D-203
Yokohama-Shi, Kanagawa-Ken 230 (JP)
• Miyawaki, Hidemitsu
Tokyo 169 (JP)
• Hieta, Kaoru
Anan-Shi, Tokushima-Ken 774-00 (JP)

(74) Representative: VOSSIUS & PARTNER
Siebertstrasse 4
81675 München (DE)

(54) Titania/silica composite particles and process for producing the same

(57) The composite particles of titania and silica are provided, which are useful as a filler in paper making and impart excellent brightness and opacity to the resultant paper. The composite particles comprise the secondary silica particles used as a core and 2 to 25 % by weight, based on silica, of crystalline titanium dioxide carried by the surface of the secondary silica particles. The average particle diameter of the composite particles is 3 to 25 $\mu$m and at least 80 % by weight of the particles have a diameter of 1 to 30 $\mu$m.

The composite particles are obtained by (1) adding a mineral acid to an aqueuos alkali silicate solution at 20 to 80°C so that said mineral acid is added in an amount of 30 to 70 % by weight of the total amount of said mineral acid necessitated for neutralizing said aqueous alkali silicate solution, and increasing the temperature of the resultant mixture to 60 to 100 °C in case where the temperature of the mixture is below 60 °C, so as to precipitate secondary silica particles in said mixture; (2) adding crystalline titanium dioxide to said secondary silica particles at a pH of 7 or higher, said titanium dioxide being used in an amount of 2 to 25 % by weight of the total silica contained in said aqueous alkali silicate solution, to form a slurry; and (3) adding a mineral acid to the slurry to control the pH of the slurry to 3 to 6.5.

## Description

The present invention relates to composite particles comprising titania and silica used as a filler in paper making so as to impart excellent brightness and opacity, particularly remarkable opacity-after-printing, to the paper, as well as a process for producing the composite particles.

Recently, the thickness of paper sheets tends to be reduced so as to make the weight thereof lighter. However, particularly when the weight of paper to be printed is reduced, the opacity of the paper after printing is reduced, and the prints are visible through the paper from the other side thereof unfavorably. Therefore, various fillers are usually added to the paper so as to prevent the paper from reduction in the opacity after printing.

Although investigations on various inorganic and organic fillers are made for the purpose of improving the opacity, fillers which are inexpensive and which have a sufficient effect of improving the opacity have never been developed yet.

Since there is a growing tendency of reducing the thickness of paper sheets, the development of a filler capable of improving not only the opacity of the paper after printing by inhibiting the penetration of oily components of a printing ink used but also the opacity of the white paper itself, is eagerly demanded.

There are generally many inorganic and organic compounds known as fillers, for example, those fillers such as titanium oxide which are capable of improving the opacity of white paper but which are insufficient for inhibiting the penetration of the ink and provide a very poor retention when they are added to pulp and processed with a paper-making machine even with a particle size capable of providing the maximum light-scattering, and accordingly, which are economically disadvantageous; and those fillers, such as an organic urea/formaldehyde resin, having an insufficient absolute capacity in each respect, although they have a capacity of improving both opacity after printing and opacity of the white paper itself.

Further, there are also known, fillers such as hydrous silicic acid more inexpensive than other kinds of fillers and effective in imparting the opacity after printing to paper when they are added to pulp to be made into the paper. However, the effects of them including the effect of making the white paper opaque are yet below a satisfactory level.

JP-A-6-45451 discloses a composite of titania and silica for overcoming the above-described defects of fillers. However, the composite is produced by adding an acidic solution of titanium into an aqueous alkali silicate solution in the presence or absence of a titanium oxide for a period of at least 30 minutes so that pH of the aqueous solution is kept in the range of 1 to 7 and then heating the mixture to a temperature between 80 °C and the boiling point of the aqueous solution. The composite thus obtained is amorphous and comprises a single compound formed by bonding titania with silica contained in the composite, a microblend of them, or a mixture of them. Titania does not have the optimum crystal structure from the viewpoint of the scattering of light.

Even when the neutralization reaction is carried out in the presence of crystalline titanium oxide, a major part of the particles of this compound are coated with a composite of titania and silica. As a result, titania and silica contained in the composite cannot sufficiently exhibit their excellent light-scattering function.

No concrete description is given in JP-B-6-45451 on how excellent effect on the opacity of the paper after printing or on the opacity of the white paper is obtained by adding the composite as a filler for the paper. Moreover, since the composite is obtained in the form of a solid substance, the handleability thereof is poor and the pulverization and handling thereof are laborous. Thus, it cannot be efficiently produced.

An object of the present invention is to provide composite titania/silica particles capable of imparting extremely high brightness and opacity to a paper sheet when they are used together with pulp feed in paper making.

Another object of the invention is to provide a process for efficiently and easily producing the composite particles at a relatively low cost.

These objects could be achieved on the basis of the finding that a slurry of composite titania/silica particles, the composite titania/silica particles comprising a silica core and crystalline titanium dioxide carried by the core in such a state that the titanium dioxide particles are partially exposed on the surface of the core, can be obtained relatively easily by partially neutralizing an aqueous alkali silicate solution with a mineral acid, adding crystalline titanium dioxide to the resultant mixture when secondary silica particles begin to precipitate or after the formation of the secondary silica particles is completed, and controlling pH of the resultant slurry. In addition it has been found that, when such composite particles are used together with a pulp feed in paper making, an excellent effect of improving the brightness and opacity of the obtained paper, particularly opacity after printing, is obtained.

The present invention relates to the following subject matters:

1. Composite particles of titania and silica, comprising secondary silica particle as a core and 2 to 25 % by weight, based on silica, of crystalline titanium dioxide carried by the surface of the secondary silica particle, the average particle diameter of the composite particles being 3 to 25 $\mu$m and at least 80 % by weight of the composite particles having a diameter of 1 to 30 $\mu$m; and

2. A process for producing composite titania/silica particles comprising crystalline titanium dioxide and secondary silica particles, comprising the steps of:

(1) adding a mineral acid to an aqueuos alkali silicate solution at 20 to 80°C so that said mineral acid is added in an amount of 30 to 70 % by weight of the total amount of said mineral acid necessitated for neutralizing said aqueous alkali silicate solution, and increasing the temperature of the resultant mixture to 60 to 100 °C in case where the temperature of the mixture is below 60 °C, to precipitate secondary silica particles in the mixture;

(2) adding crystalline titanium dioxide to said secondary silica particles at a pH of 7 or higher, said titanium dioxide being used in an amount of 2 to 25 % by weight based on silica contained in said aqueous alkali silicate solution to prepare a slurry; and

(3) adding a mineral acid to said slurry to control the pH thereof to 3 to 6.5.

The process of the present invention for producing composite particles of titania and silica comprises (1) adding a mineral acid to an aqueuos alkali silicate solution at 20 to 80 °C, preferably 30 to 70 °C, more preferably 40 to 60°C so that the mineral acid is added in an amount of 30 to 70 % by weight, preferably 30 to 60 % by weight, more preferably 40 to 50 % by weight of the total amount of said mineral acid necessitated for neutralizing the aqueous alkali silicate solution, and increasing the temperature of the resultant mixture to 60 to 100°C, preferably 65 to 95 °C in case where the temperature of the mixture is below 60 °C, so as to precipitate secondary silica particles; (2) adding to the secondary silica particles, 2 to 25 % by weight, preferably 5 to 20 % by weight, based on silica (silicon dioxide) contained in the aqueous alkali silicate solution, of crystalline titanium dioxide, at a pH of 7 or higher, after the initiation of the precipitation of the secondary silica particles or after the completion thereof; and (3) controlling the pH of the resultant slurry at 3 to 6.5 with a mineral acid and, if necessary, aging the slurry and pulverizing and/or classifying the composite particles in the slurry by a wet method. Preferably, an aging step is added in step (1) before the increase of the temperature and between steps (2) and (3).

Although the aqueous alkali silicate solution used in the present invention is not particularly limited, it is preferably an aqueous sodium silicate solution or aqueous potassium silicate solution. The molar concentration of the aqueous alkali silicate solution is preferably in the range of molar ratio ($SiO_2/Na_2O$) of 2.0 to 3.4, more preferably 2.5 to 3.4.

The mineral acid usable in the present invention is any of known mineral acids without limitation. Examples of the mineral acids include hydrochloric acid, sulfuric acid and nitric acid. Among them, sulfuric acid is preferred, since it is easily available at a relatively low cost. The concentration of the mineral acid which is not particularly limited is usually in the range of 10 to 30 % by weight, preferably 15 to 25 % by weight.

In the present invention, the mineral acid is added to the aqueous alkali silicate solution in at least two portions. The first aliquot of the mineral acid is added at a temperature of 20 to 55°C preferably 30 to 55°C, to precipitate secondary silica particles. In the formation of the particles, the mineral acid is added first in an amount of preferably 30 to 70 % by weight, more preferably 35 to 60% by weight, based on the total mineral acid necessitated for the neutralization of the aqueous alkali silicate solution, so that the pH of the silicate solution is kept 7 or higher, preferably 8 to 12. Then, the temperature of the solution is increased to 60 to 100 °C, preferably 65 to 95 °C. If necessary, aging may be conducted after the addition of the first aliquot of the mineral acid, for 20 to 180 minutes, preferably 30 to 150 minutes.

The first aliquot of the mineral acid is added to the aqueous alkali silicate solution at once or continuously in a short time.

The temperature of the aqueous alkali silicate solution is elevated to 60 to 100°C under stirring in a short time, e.g., 10 to 30 minutes.

Then, crystalline titanium dioxide is added at a pH of 7 or higher, preferably 8 to 12, after the initiation of the precipitation of the secondary silica particles or after the completion of the precipitation thereof, or after the completion of both precipitation and aging, if any. If necessary, aging may be conducted on the slurry after the addition of crystalline titanium dioxide, for 20 to 180 minutes, preferably 30 to 150 minutes.

Then, an additional mineral acid is added at once or continuously to complete the neutralization of the aqueous alkali silicate solution or to control the pH of the slurry containing the composite particles at 3 to 6.5, preferably 4 to 6. If necessary, the aging may be conducted for 20 to 180 minutes, preferably 30 to 150 minutes. It is preferred that the temperature is kept at 90 to 100°C, after the addition of crystalline titanium dioxide so as to obtain the composite particles of titania and silica having an excellent effect.

In a preferred embodiment of the present invention, the first aliquot of the mineral acid is added for the partial neutralization, then the temperature is elevated and the secondary silica particles thus formed is sufficiently aged, crystalline titanium dioxide is added thereto at a pH of 7 or higher, an additional mineral acid is added to control pH of the aqueous solution in the range of 3 to 6.5, and then the resultant product is further aged to stably obtain the composite particles of titania and silica having further improved properties. An electrolytic substance such as sodium sulfate may be previously added so as to keep the viscosity of the slurry and to stabilize it in the formation of flocks or the acceleration of the aging.

The term "aging" herein indicates that the slurry is kept at a predetermined temperature, under slow stirring for a predetermined time such as 20 to 180 minutes.

The composite particles of the present invention contain 2 to 25 % by weight, preferably 5 to 20 % by weight of crystalline titanium dioxide based on the weight of silica. When the amount of titanium dioxide is below 2 % by weight, the composite particles are incapable of imparting the intended opacity after printing or white paper opacity to the paper. On the contrary, even when it exceeds 25 % by weight, the excellent brightness and opacity are no more improved. Such an excess amount is economically disadvantageous, since the production cost of the composite particles is also increased by the increased expensive titanium oxide.

The type of crystalline titanium dioxide used for forming the composite particles of titania and silica in the present invention is not particularly limited. Either rutile- or anatase-type titanium dioxide is usable. Titanium dioxide may be surface-treated with silica, alumina or the like. The average particle size of crystalline titanium dioxide is in the range of 50 to 400 nm, preferably 100 to 300 nm. When the average particle size is below or above this range, the light-scattering power is weakened unfavorably.

According to X-ray diffraction method, the peak of titanium dioxide crystals in the composite titania/silica particles obtained by the present invention can be confirmed. Also in the observation with a scanning electron microscope, it can be confirmed that the carried particles of titanium dioxide are exposed on the silica surface.

By comparing the particle size distribution of a mere mixture of crystalline titanium dioxide and silica at the same mixing ratio as that in the above-described composite particles, with that of the present composite particles by means of a size distribution-determining device of laser diffraction type (SALD-1100, a product of Shimadzu Corporation), it has been found that the peak peculiar of the present composite particles due to titanium oxide in the particle size distribution is far smaller than that of the mere mixture. This fact suggests that the composite particles of the present invention comprise a secondary particle of silica as a core and titanium dioxide particles fixed on the surface of the core and exposed on the surface.

It is the most important in the production of the composite titania/silica particles of the present invention that a part of the mineral acid necessitated for neutralizing the aqueous alkali silicate solution (namely 30 to 70 %, preferably 35 to 60 % of the mineral acid necessitated for the neutralization) is added first at a temperature of 20 to 55°C, then the temperature is elevated to 60 to 100 °C, and crystalline titanium dioxide is added at a pH of 7 or higher, preferably 8 to 12, after the initiation of the precipitation of the secondary silica particles or after the completion of the precipitation thereof. Therefore, a mineral acid may be added, if necessary, to further control the pH of the aqueous solution in the above-described range after the first addition of the mineral acid and before the addition of crystalline titanium dioxide. The aging of the secondary silica particles may be conducted only before the addition of crystalline titanium dioxide or both before and after the addition thereof.

Although the mechanism of the impartation of the high opacity to the paper obtained by adding the composite particles of titania and silica of the present invention to the pulp material in the paper making has not been elucidated yet, the inventors suppose the mechanism as follows: when titanium dioxide is added after the formation of the secondary silica particles or, if necessary, after aging thereof to form the composite particles in the process of the present invention, the crystalline titanium dioxide particles carried by each secondary silica particle as a core are exposed on the surface thereof. Thus, the properties of titanium dioxide can be exhibited without reducing the scattering effect thereof and, in addition, the excellent effect of the silica particles used as a core to improve the brightness and opacity is kept to the same extent as that in known processes disclosed in, for example, JP-B-4-55971 and JP-A-5-178606.

The remarkable effect of the composite particles in improving the brightness and opacity of the paper is thus obtained by the synergism of tetanium oxide and silica as described above.

Another effect of the present invention is that, since the crystalline titanium dioxide forms composite particles with the silica particles, the retention of titanium dioxide in the paper making is higher than that obtained when titanium dioxide and silica are added separately from each other or in the form of a mere mixture thereof in the paper making.

On the contrary, when titanium dioxide is added before the secondary silica particles are formed and precipitated, titanium dioxide is confined in the mass of the silica particles to form composite particles each comprising titanium dioxide coated with silica. As a result, the function of titanium dioxide is seriously impaired and the light scattering efficiency thereof is reduced. Such composite particles are incapable of imparting the desired brightness or opacity to the paper.

The composite particles of titania and silica obtained by the process of the present invention are in the form of a slurry thereof. The slurry can be transported by a well known means and stored in also a well known storage space.

The composite particles of the present invention are wet-pulverized and/or wet-classified before using them as a filler for paper. The wet pulverization is conducted by means of a known continuous homomixer, colloid mill, disc refiner, sand grinder, ball mill, rod mill or the like. When the composite particles are to be classified after the pulverization, the pulverized particles are wet-classified with a known classification means such as a known vibrating screen to remove coarse particles larger than 70 to 75 $\mu$m. After such a process, the composite particles have an average diameter in the range of 3 to 25 $\mu$m, preferably 6 to 15 $\mu$m. At least 80 % by weight, preferably at least 83 % by weight, (the maximum 100% by weight) of the composite particles have a diameter of 1 to 30 $\mu$m. The present composite particles generally have a specific surface area of 90 to 140 $m^2$/g, as determined by BET method by nitrogen gas adsorption and an oil absorption in the range of 200 to 350 g/100g, as determined by JIS K 5101.

As described above, the present composite particles of titania and silica of the present invention, wherein crystalline titanium dioxide particles are carried on the surface of the secondary silica particles as a core, are usable as fillers in the paper making so as to impart a high brightness and opacity to the paper and particularly to impart a very high opacity after printing.

The following Examples will further illustrate the present invention, which by no means limit the invention as a matter of course. In the following Examples, percentages are given by weight.

## Example 1

240 g of commercially available aqueous solution of No. 3 sodium silicate according to JIS K 1408 (solid concentration: 30 %, a product of Tokuyama Soda Co., Ltd.) was diluted with pure water to make the total 1,000 g. The solution having a silica (silicon dioxide) concentration of 72 g/kg was fed into a 2-liter stainless steel beaker. 17.9 g of anhydrous sodium sulfate was added thereto at 50°C. 72 g (corresponding to 40 % based on the total of an acid necessitated for the neutralization) of 20 % sulfuric acid solution was continuously added to the resultant mixture at 50°C under stirring with a three-one motor for 15 minutes.

After the completion of the addition of sulfuric acid, the temperature was slowly elevated to 85°C under stirring for 15 minutes. The stirring was continued at that temperature for aging for 60 minutes. After the temperature was elevated to 95 °C, 36 g of sulfuric acid was continuously added thereto and then 7.2 g of crystalline titanium dioxide (JA-2, particle diameter: 250 nm, a product of Teika) was added thereto at pH 10.8. The amount of crystalline titanium dioxide used was 10% based on the weight of silica contained in the aqueous alkali silicate solution ($TiO_2/SiO_2$=10 %).

Thereafter, 72 g of sulfuric acid was continuously added to the resultant slurry for 15 minutes to neutralize the remaining alkali and then the aging was conducted at 95 °C for 30 minutes. The pH of the slurry was 5.5 in this stage.

1500 g of glass beads having a diameter of 2.0 to 2.6 mm were added to the slurry containing the composite particles, which were finely pulverized by stirring the slurry at 450 rpm with a three-one motor for 9 minutes. The slurry thus obtained was passed through a standard JIS 200 mesh sieve and the residue was removed. The average diameter of the composite particles as determined with the above-described size distribution-determining device of laser diffraction type was 10.2 μm. 83.5 % of the composite particles had a diameter of 1 to 30 μm.

The slurry containing the composite particles which had passed through the sieve was filtered through Buchner funnel to obtain the composite particles in the form of a cake. The composite particles were dispersed in water, and the dispersion was stirred to obtain a slurry again. The slurry concentration was controlled at 8 %.

25 g (absolute dry weight) of a pulp mixture comprising 15 % of bleached kraft pulp from soft wood, 34 % of thermomechanical pulp (TMP), 11 % of groundwood pulp (GP) and 40 % of a deinked pulp from newspapers was dispersed in city water to obtain 2 *l* of a 1.25 % pulp slurry. 3 %, based on the absolute dry weight of the pulp, of the slurry containing the composite particles prepared as described above was added to the pulp slurry. After stirring for 2 minutes, 1 %, based on the absolute dry weight of the pulp, of aluminum sulfate [$Al_2(SO_4)_3 \cdot 18H_2O$] was added to the resultant mixture. The whole mixture was stirred for 2 minutes, diluted to 12.5 *l* and thoroughly stirred. A sheet of paper having a basis weight of 40.0 g/m$^2$ was made with a square sheet making machine of TAPPI standard, and then dried.

The moisture of the handmade paper thus obtained was controlled in a room kept at 20°C and at a relative humidity of 65 %. The smoothness of the paper was controlled by passing the paper through an experimental machine calender under a line pressure of 40 kg/cm twice. The paper quality test and printing test of the paper were conducted to determine the quality (brightness and opacity) of the paper by the following methods to evaluate the paper.

The test methods were as follows:

(1) Brightness:
    The brightness was determined according to JIS P 8123.
(2) Opacity of white paper:
    The opacity of white paper was determined according to JIS P 8138 with a backing plate having a reflectivity of 89.5 %.
(3) Opacity after printing:
    The solid printing (11 × 21 cm) was conducted with an offset ink for newspaper by means of an RI print tester. The opacity Y (%) after printing was defined by the following formula (1):

$$Y \ (\%) = [(\text{reflectivity of back surface after printing}) / (\text{reflectivity of back surface before printing})] \times 100 \qquad (1)$$

The production cost and the total evaluation were based on the following standards:
The production cost was evaluated according to the following criteria:

$TiO_2/SiO_2$ = below 5 %: relatively inexpensive ◎
= above 5 % and not above 10 %: medium ○
= above 10 % and not above 25 %: slightly expensive △
= above 25 %: expensive X.

The total evaluation was evaluated as follows:

The best ◎: whiteness of at least 50 %, white paper opacity of at least 84.5 %, opacity after printing of at least 87.0 % and production cost of ◎.
Good ○: excellent properties and the production cost of △ or above.
Bad △: excellent properties and the production cost of X.
Very bad X: any one of the properties is below the above-described value.

Production costs:

◎: relatively inexpensive
○: medium
△: slightly expensive
X: expensive.

Total evaluation:

◎: the best
○: good
△: bad
X: very bad

Example 2

The first aliquot of sulfuric acid was added and then the temperature was elevated in the same manner as that of Example 1. After the secondary silica particles had begun to be precipitated and the temperature of the slurry had become 75 °C, 7.2 g of titanium dioxide was added at a pH of 11.5, to prepare a slurry containing the composite particles. The amount of titanium dioxide used was 10% based on the weight of silica contained in the aqueous alkali silicate solution ($TiO_2/SiO_2$=10 %).

The temperature was further elevated to 85°C under stirring. The stirring was continued at that temperature for the aging for 60 minutes.

After the temperature was elevated to 95°C, 108 g of sulfuric acid was continuously added to the slurry for 15 minutes, and the whole slurry was aged at that temperature for 30 minutes. At this time, pH of the slurry was 5.6.

After the pulverization of the obtained slurry followed by the classification, filtration and redispersion in the same manner as that of Example 1, the slurry containing the composite particles was obtained. The average particle diameter of the composite particles in the slurry was 10.3 $\mu$m, and 94.9 % of these particles had a particle diameter of 1 to 30 $\mu$m.

Handmade sheets were prepared from the slurry and tested in the same manner as that of Example 1.

Example 3

The same procedure as that of Example 1 was repeated except that the amount of crystalline titanium dioxide was altered to 14.4 g. This amount of crystalline titanium dioxide was 20% based on the weight of silica contained in the aqueous alkali silicate solution ($TiO_2/SiO_2$=20 %). The slurry containing the composite particles was evaluated in the same manner as that of Example 1. The average particle diameter of the composite particles was 8.3 $\mu$m, and 86.4 % of these particles had a particle diameter of 1 to 30 $\mu$m.

Example 4

The first aliquot of sulfuric acid was added and then the aging was conducted for 60 minutes in the same manner as that of Example 1. The temperature was elevated to 95 °C, and 3.6 g of crystalline titanium dioxide was added at a pH of 11.4. The amount of crystalline titanium dioxide used was 5% based on the weight of silica contained in the aqueous alkali silicate solution ($TiO_2/SiO_2$=5 %). 108 g of sulfuric acid was continuously added for 15 minutes so as to neutralize the remaining alkali. After the completion of the addition of sulfuric acid, the resultant slurry containing the composite particles was aged at that temperature for 30 minutes. At this time, the slurry had a pH of 5.1.

After the pulverization of the slurry followed by the classification, filtration and redispersion in the same manner as that of Example 1, the slurry containing the composite particles was obtained. The average particle diameter of the composite particles was 11.0 $\mu$m, and 92.0 % of these particles had a particle diameter of 1 to 30 $\mu$m. Handmade sheets were prepared from the slurry and tested in the same manner as that of Example 1.

Example 5

In the same manner as in Example 1, the first aliquot of sulfuric acid was added and then the aging was conducted for 60 minutes, the temperature was elevated to 95°C, 90 g of sulfuric acid was continuously added to the resultant mixture, and 7.2 g of crystalline titanium dioxide was added at a pH of 8.4. The amount of crystalline titanium dioxide used was 10% based on the weight of silica contained in the aqueous alkali silicate solution ($TiO_2/SiO_2$=10 %). After the completion of the addition of titanium dioxide, additional 22 g of sulfuric acid was added, and the slurry containing the composite particles was aged at that temperature for 30 minutes. At this time, the slurry had a pH of 4.1.

After the pulverization of the slurry followed by the classification, filtration and redispersion in the same manner as that of Example 1, the slurry of the composite particles was obtained. The average particle diameter of the composite particles in the slurry was 6.5 $\mu$m, and 83.5 % of these particles had a particle diameter of 1 to 30 $\mu$m. Handmade sheets were prepared from the slurry and tested in the same manner as that of Example 1.

Example 6

In the same manner as in Example 1, the first aliquot of sulfuric acid was added and then the aging was conducted for 60 minutes, the temperature was elevated to 95°C, 54 g of sulfuric acid was continuously added to the resultant mixture, and 10.8 g of crystalline titanium dioxide was added at a pH of 10.6. The amount of crystalline titanium dioxide used was 15% based on the weight of silica contained in the aqueous alkali silicate solution ($TiO_2/SiO_2$=15 %). Then, 54 g of sulfuric acid was continuously added to the mixture for 15 minutes so as to neutralize the remaining alkali. After the completion of the addition of sulfuric acid, the reaction mixture was aged at 95 °C for 30 minutes. At this time, the slurry had a pH of 5.2.

After the pulverization of the obtained slurry followed by the classification, filtration and redispersion in the same manner as that of Example 1, the slurry of the composite particles was obtained. The average particle diameter of the composite particles in the slurry was 10.1 $\mu$m, and 87.2 % of these particles had a particle diameter of 1 to 30 $\mu$m. Handmade sheets were prepared from the slurry and tested in the same manner as that of Example 1.

Comparative Example 1

Composite particles were prepared in the same manner as in Example 1 except that the amount of crystalline titanium dioxide was altered to 28.8 g (40% based on the weight of silica contained in the aqueous alkali silicate solution ($TiO_2/SiO_2$=40 %)). Handmade sheets were prepared using the composite particles and tested in the same manner as that of Example 1. The average particle diameter of the obtained composite particles was 6.2 $\mu$m, and 66.7 % of these particles had a particle diameter of 1 to 30 $\mu$m.

Comparative Example 2

Composite particles were prepared in the same manner as in Example 6 except that the amount of crystalline titanium dioxide was altered to 0.36 g (0.5 % based on the weight of silica contained in the aqueous alkali silicate solution ($TiO_2/SiO_2$ = 0.5 %)). Handmade sheets were prepared from the composite particles and tested. The average particle diameter of the obtained composite particles was 10.9 $\mu$m, and 96.2 % of these particles had a particle diameter of 1 to 30 $\mu$m.

Comparative Example 3

Composite particles were prepared in the same manner as that of Example 1 except that the amount of crystalline titanium dioxide was altered to 7.2 g (10% based on the weight of silica contained in the aqueous alkali silicate solution ($TiO_2/SiO_2$=10 %)) and that crystalline titanium dioxide was added prior to the initiation of the reaction, namely prior to the addition of the first aliquot of sulfuric acid. Handmade sheets were prepared using the composite particles and tested in the same manner as that of Example 1. The average particle diameter of the obtained composite particles was 10.2 $\mu$m, and 91.3 % of these particles had a particle diameter of 1 to 30 $\mu$m.

Comparative Example 4

Composite particles were prepared in the same manner as in Example 1 except that sulfuric acid was added to the aqueous sodium silicate solution in three portions, i.e., 50.4 g of the first aliquot, 25.2 g of the second aliquot and 50.4 g of the third aliquot, and that the amount of crystalline titanium dioxide was altered to 3.6 g (5 % based on the weight of silica contained in the aqueous alkali silicate solution ($TiO_2/SiO_2$ = 5 %)). At this time, the slurry had a pH of 9.8.

After the pulverization of the resultant slurry followed by the classification, filtration and redispersion in the same manner as that of Example 1, the slurry containing the composite particles was obtained. Handmade sheets were prepared from the slurry and tested in the same manner as that of Example 1. The average particle diameter of the obtained composite particles was 10.7 μm, and 92.5 % of these particles had a particle diameter of 1 to 30 μm.

Comparative Example 5

Silica was prepared in the same manner as in Example 1 except that the crystalline titanium dioxide was not added and that the second and third aliquots of sulfuric acid were combined together and added to the solution. After the pulverization of the resultant silica followed by the classification, filtration and redispersion in the same manner as that of Example 1, the slurry containing the composite particles was obtained. Handmade sheets were prepared from the slurry and tested in the same manner as that of Example 1. The average particle diameter of the obtained composite particles was 11.2 μm, and 98.6 % of these particles had a particle diameter of 1 to 30 μm.

Referential Example

For comparison, handmade sheets were prepared in the same manner in Example 1 except that no filler was used at all, and the sheets were evaluated also in the same manner as in Example 1.

The results obtained in the Examples, Comparative Examples and Referential Example are shown in Table 1.

Table 1

| | $TiO_2/SiO_2$ ratio (%) | pH at completion of neutralization reaction | Composite particle | |
| --- | --- | --- | --- | --- |
| | | | Aver. particle diameter | Particles (%) of 1-30 μ m |
| Ex. 1 | 10.0 | 5.5 | 10.2 | 83.5 |
| Ex. 2 | 10.0 | 5.6 | 10.3 | 94.9 |
| Ex. 3 | 20.0 | 5.2 | 8.3 | 86.4 |
| Ex. 4 | 5.0 | 5.6 | 11.0 | 92.0 |
| Ex. 5 | 5.0 | 4.1 | 6.5 | 83.5 |
| Ex. 6 | 15.0 | 5.2 | 10.1 | 87.2 |
| Comp. Ex. 1 | 40.0 | 5.7 | 6.2 | 66.7 |
| Comp. Ex. 2 | 0.5 | 5.7 | 10.9 | 96.2 |
| Comp. Ex. 3 | 10.00 | 5.4 | 10.2 | 91.3 |
| Comp. Ex. 4 | 5.0 | 9.8 | 10.7 | 92.5 |
| Comp. Ex. 5 | 0 | 5.4 | 11.2 | 98.6 |
| Ref. Ex. | — | — | — | — |

Table 1 (continued)

| | Composite particle-containing paper | | | Cost of composite particles | Total evaluation |
|---|---|---|---|---|---|
| | Brightness (%) | Opacity (%) | | | |
| | | White paper | Printed paper | | |
| Ex. 1 | 54.5 | 85.0 | 88.8 | ○ | ○ |
| Ex. 2 | 54.6 | 84.6 | 87.2 | ○ | ○ |
| Ex. 3 | 54.8 | 85.1 | 87.8 | △ | ○ |
| Ex. 4 | 54.3 | 84.8 | 87.5 | ◎ | ◎ |
| Ex. 5 | 54.4 | 84.5 | 87.4 | ◎ | ◎ |
| Ex. 6 | 54.7 | 84.9 | 87.8 | △ | ○ |
| Comp. Ex. 1 | 54.9 | 85.2 | 88.0 | × | △ |
| Comp. Ex. 2 | 54.0 | 83.9 | 86.0 | ◎ | × |
| Comp. Ex. 3 | 54.1 | 84.2 | 86.7 | ○ | × |
| Comp. Ex. 4 | 53.9 | 84.0 | 86.3 | ◎ | × |
| Comp. Ex. 5 | 53.7 | 83.8 | 85.6 | ◎ | × |
| Ref. Ex. | 52.7 | 82.5 | 84.4 | — | — |

It is apparent from Table 1 that the composite particles obtained by the present invention are capable of imparting high brightness and opacity, particularly an extremely high opacity after pringing, to the paper containing them (cf. Examples 1 to 6).

On the other hand, when the amount of crystalline titanium dioxide is excessive (40 % by weight; Comparative Example 1), the effect of the composite particles is substantially as high as that obtained by using a half quantity of crystalline titanium dioxide (20 % by weight; Example 3). Thus, the production cost of the composite particles is high, since expensive titanium dioxide is used in a large amount. This is economically disadvantageous.

On the contrary, when crystalline titanium dioxide is not used (Comparative Example 5) or when neither silica nor crystalline titanium dioxide is used at all as a filler (Referential Example) or when only a small amount of crystalline titanium dioxide (0.5 %; Comparative Example 2) is used, the brightness, opacity after printing and opacity of white paper are poor disadvantageously.

When crystalline titanium dioxide is added prior to the formation of the secondary silica particles or, in other words, prior to the initiation of the neutralization reaction (Comparative Example 3), the opacity after printing and the white paper opacity cannot be sufficiently improved. This phenomenon is caused supposedly because crystalline titanium dioxide particles thus added are covered by the secondary silica particles and thereby confined in the mass of the latter to reduce the light-scattering effect of crystalline titanium dioxide.

When the neutralization is insufficient (pH 9.8, Comparative Example 4), the formation of the silica particles to be used as a core is insufficient and, therefore, the sufficient effect of improving the brightness, opacity after printing and the white paper opacity cannot be obtained.

As described above, according to the present invention, a slurry containing the present composite particles of titania and silica can be easily produced at a relatively low cost. The handling of the composite particles is easy. The composite particles are capable of imparting high brightness and opacity, particularly an extremely high opacity after pringing, to the paper.

**Claims**

1. Composite particles comprising secondary silica particles as a core and 2 to 25 % by weight, based on silica, of crystalline titanium dioxide carried by the surface of said secondary silica particles, the average particle diameter of said composite particles being 3 to 25 $\mu$m and at least 80 % by weight of said composite particles having a diameter of 1 to 30 $\mu$m.

2. The composite particles of claim 1, wherein the average particle diameter of said crystalline titanium dioxide is 50 to 400 nm.

3. The composite particles of claim 2, wherein the average particle diameter of said crystalline titanium dioxide is 100 to 300 nm.

4. The composite particles of any one of claims 1 to 3, wherein 5 to 20 % by weight, based on silica, of said crystalline titanium dioxide is carried by the surface of said secondary silica particles.

5. The composite particles of any one of claims 1 to 4, wherein the average particle diameter of said composite particles is 6 to 15 $\mu$m.

6. The composite particles of any one of claims 1 to 5, wherein at least 83 % by weight of said composite particles has a diameter of 1 to 30 $\mu$m.

7. A process for producing composite particles comprising crystalline titanium dioxide and secondary silica particles, comprising the steps of:

   (1) adding a mineral acid to an aqueuos alkali silicate solution at 20 to 80°C so that said mineral acid is added in an amount of 30 to 70 % by weight of the total amount of said mineral acid necessitated for neutralizing said aqueous alkali silicate solution, and increasing the temperature of the resultant mixture to 60 to 100 °C in case where the temperature of the mixture is below 60 °C, so as to precipitate secondary silica particles in said mixture;
   (2) adding crystalline titanium dioxide to said secondary silica particles at a pH of 7 or higher, said titanium dioxide being used in an amount of 2 to 25 % by weight of the total silica contained in said aqueous alkali silicate solution, to form a slurry; and
   (3) adding the remaining amount of said mineral acid to said slurry to control the pH of said slurry to 3 to 6.5.

8. The process of claim 7, wherein in step (1), said mineral acid is added in an amount of 35 to 60 % by weight of the total amount of said mineral acid necessitated for neutralizing said aqueous alkali silicate solution.

9. The process of claim 7 or 8, wherein in step (2), said titanium dioxide is used in an amount of 5 to 20 % by weight of the total silica contained in said aqueous alkali silicate solution.

10. The process of any one of claims 7 to 9, wherein in step (1), said mineral acid is added to said aqueous alkali silicate solution at 30 to 70°C.

11. The process of any one of claims 7 to 10, wherein in step (2), said titanium dioxide is added to said secondary silica particles, simultaneously with the initiation of the formation of said secondary silica particles or after the completion of the formation of said secondary silica particles.

12. The process of any one of claims 7 to 11, further comprising a step of aging said slurry after step (3).

13. The process of any one of claims 7 to 12, further comprising an aging step after the increase of the temperature in step (1).

14. The process of any one of claims 7 to 13, further comprising a step of aging said slurry after step (2).

15. The process of any of claims 7 to 14, wherein, after step (3), said slurry is pulverized and/or classified by a wet method.

**European Patent Office**

## EUROPEAN SEARCH REPORT

Application Number

EP 96 11 9650

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | EP 0 573 150 A (TIOXIDE GROUP SERVICES)<br>* page 2, line 52-55; claims 1,2,4,9 *<br>* page 3, line 13-19 * | 1-6 | C09C1/00<br>C09C1/30 |
| A | DATABASE WPI<br>Week 9118<br>Derwent Publications Ltd., London, GB;<br>AN 91-130214<br>XP002027225<br>& JP 03 070 768 A (TORAY IND.) , 26 March 1991<br>* abstract * | 1 | |
| A | DATABASE WPI<br>Week 8740<br>Derwent Publications Ltd., London, GB;<br>AN 87-281912<br>XP002027226<br>& JP 62 197 309 A (TOKUYAMA SODA) , 1 September 1987<br>* abstract * | | |
| D | & JP 06 045 451 B (...) 15 June 1994 | | TECHNICAL FIELDS SEARCHED (Int.Cl.6)<br><br>C09C |
| A | DATABASE WPI<br>Week 7602<br>Derwent Publications Ltd., London, GB;<br>AN 76-02758X<br>XP002027227<br>& JP 50 115 190 A (MITSUBISHI CHEM. IND.)<br>, 9 September 1975<br>* abstract * | | |
| A | PATENT ABSTRACTS OF JAPAN<br>vol. 12, no. 50 (C-476), 16 February 1988<br>& JP 62 197309 A (KOGA YOSHIAKI), 1 September 1987,<br>* abstract * | 1 | |

The present search report has been drawn up for all claims

| Place of search | Date of completion of the search | Examiner |
|---|---|---|
| THE HAGUE | 10 March 1997 | Van Bellingen, I |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)